# EUROPÄISCHE PATENTSCHRIFT

(11) **EP 1 225 102 B1**
(45) Veröffentlichungstag und Bekanntmachung des Hinweises auf die Patenterteilung: **11.04.2007**
(21) Anmeldenummer: 01130323.7
(22) Anmeldetag: 19.12.2001
(51) Int. Cl.: B60R 21/13

(54) **Insassen-Schutzvorrichtung für ein Kraftfahrzeug**
Occupant protection apparatus for vehicle
Dispositif de protection de l'occupant d'une automobile

(30) Priorität: 23.01.2001 DE 20101165 U
(43) Veröffentlichungstag der Anmeldung: 24.07.2002
(73) Patentinhaber: Blechformwerke Bernsbach AG, 08315 Bernsbach (DE); ISE Innomotive Systems Europe GmbH, 51702 Bergneustadt (DE)
(72) Erfinder: Müller, Hartwig Dr., 09126 Chemnitz (DE)
(74) Vertreter: Grünecker, Kinkeldey, Stockmair & Schwanhäusser Anwaltssozietät

(56) Entgegenhaltungen:
- DE-A- 4 209 094
- DE-C- 19 906 912
- DE-C- 19 925 520
- US-A- 5 626 361

## Beschreibung

Die Erfindung betrifft eine Insassen-Schutzvorrichtung gemäß Oberbegriff des Anspruchs 1.

Bei der aus gattungsbildenden EP 0 459 213 A bekannten Insassenschutzvorrichtung entspannt sich der vorgespannte Kraftspeicher nach Lösen der Sperre, um im Zusammenspiel mit einem Motor den Überrollbügel rasch in die Schutzposition zu bringen. Ohne den Kraftspeicher auszulösen, lässt sich der einen Kopfstützenaufsatz tragende Überrollbügel zur Einstellung der Kopfstützenhöhe willkürlich mittels des Motors und eines Getriebes verstellen. Der Antriebseinfluss des Motors wird also nie aufgehoben. Selbst mit der Unterstützung des ausgelösten Kraftspeichers ist die zum schnellen Anheben des Überrollbügels erforderliche Zeit maßgeblich von der Schnelligkeit und Leistungsfähigkeit des Motors, der Mechanik für die willkürliche Verstellung und der Mechanik zum Auslösen des Kraftspeichers abhängig. Dies bedingt jedoch unerwünschte Verzögerungen, wenn im Gefahrenfall der Überrollbügel so schnell und zuverlässig wie möglich die Schutzposition einnehmen und in dieser verriegelt sein muss, um bei einem Aufprall bestimmungsgemäß wirken zu können. Die Ausstattung für die beiden Verstellarten des Überrollbügels ist aufwendig und teuer.

Bei der aus EP 0 411 449 A bekannten Schutzvorrichtung hat der Überrollbügel keine Kopfstützenfunktion. Der Kraftspeicher zum raschen Verstellen des Überrollbügels mit einer Schwenkbewegung oder einer linearen Bewegung ist permanent aktiviert. Zum willkürlichen Verstellen des Überrollbügels ist ein relativ schwerer Stellantrieb vorgesehen, um den Überrollbügel unter der permanent wirkenden Kraft des Kraftspeichers präzise einstellen zu können.

Bei der aus US 5 236 219 bekannten Insassen-Schutzvorrichtung ist der Kraftspeicher permanent aktiviert. Der Überrollbügel wird im Gefahrenfall nach Lösen der Sperre aus der Ruheposition rasch in die Schutzposition ausgefahren und in dieser verriegelt. Bei einer in der Praxis benutzten Ausführungsform dieser bekannten Schutzvorrichtung ist zusätzlich ein aufwendiger Stellantrieb mit Ritzeln vorgesehen, um den Überrollbügel willkürlich gegen die permanent wirkende Kraft des Kraftspeichers verstellen zu können.

Bei der aus DE 4 342 402 A bekannten Schutzvorrichtung hat der U-förmige Überrollbügel keine Kopfstützenfunktion. Der Überrollbügel wird mittels eines Elektromotors und einer Gewindespindel zwischen der Ruheposition und der Schutzposition hin- und herverstellt. Da die Schutzvorrichtung für ein offenes Fahrzeug mit wahlweise anbringbarem Hartschalendach bestimmt ist, wird der Überrollbügel nach Abnehme des Hartschalendachs stets ausgefahren und permanent in der Schutzposition verriegelt, während er bei aufgesetztem Hartschalendach in der Ruheposition bleibt.

Bei der aus DE 19 838 989 A bekannten Schutzvorrichtung ist der als Strangpresskonstruktion ausgebildete Überrollbügel zwar gepolstert. Eine Kopfstützenfunktion erfüllt er nicht. Der Kraftspeicher ist permanent aktiviert. Im Gefahrenfall wird die Sperre gelöst und der Überrollbügel rasch in die Schutzposition gebracht und verriegelt. Eine willkürliche Verstellung ist nicht vorgesehen.

Eine einschalige oder doppelschalige Bauweise von Überrollbügeln aus Faserverbundkunststoff ist bekannt aus DE 29 807 322 U.

Der Erfindung liegt die Aufgabe zugrunde, eine Insassen-Schutzvorrichtung der eingangs genannten Art zu schaffen, die baulich einfach ist, aus wenigen Teilen besteht, und trotz der Kopfstützenverstellfunktion kostengünstig und mit geringem Gewicht ausgebildet werden kann.

Die gestellte Aufgabe wird mit den Merkmalen des Anspruchs 1 gelöst.

Die Mitnehmerkupplung kommt ausschließlich zum raschen Anheben des Überrollbügels in die Schutzposition am Überrollbügel zum Angriff, unabhängig davon, in welcher Anhebeposition sich der Überrollbügel gerade befindet. Hingegen entkoppelt die Mitnehmer kupplung den Überrollbügel permanent vom Kraftspeicher, so dass der Überrollbügel dann zur Höheneinstellung der Kopfstütze im Wesentlichen frei, d.h. ohne Einflussnahme des Kraftspeichers, beweglich bleibt. Bei willkürlichen Höheneinstellungen des Überrollbügels zwecks Positionierung der Kopfstütze haben weder die Sperre noch die Verriegelungsvorrichtung Einfluss auf den Überrollbügel. Die an der Mitnehmerkupplung angreifende Sperre hält den Kraftspeicher vorgespannt. Die Verriegelungsvorrichtung kommt auch nur in der Schutzposition des Überrollbügels zum Eingriff, und nachdem der Überrollbügel durch den Kraftspeicher rasch ausgefahren wurde. Hingegen kommt die Verriegelungsvorrichtung nicht zum Eingriff, solange der Überrollbügel willkürlich bis in die Schutzposition verstellt wird, entsprechend der höchsten Kopfstützenposition. Die Schutzvorrichtung besteht aus wenigen Einzelteilen, ist kompakt und leicht. Der Überrollbügel ist willkürlich sehr leichtgängig verstellbar, so dass er sogar zum Rückwärtsfahren zwecks besserer Sicht rasch abgesenkt und später gleich wieder in die eingestellte Position angehoben werden kann. Wird die Sperre gelöst, z.B. sensorgesteuert, dann treibt der aktivierte Kraftspeicher ohne aufwendige Hilfsmechanik nur über die Mitnehmerkupplung den Überrollbügel in die Schutzposition, in der die Verriegelungsvorrichtung den Überrollbügel über die Mitnehmerkupplung gegen die Belastungen eines Crashs abstützt.

Da zur willkürlichen Höhenverstellung des Überrollbügels der Kraftspeicher über die Mitnehmerkupplung entkoppelt ist, lässt sich der Überrollbügel zum Einstellen der Kopfstützenhöhe leichtgängig von Hand bewegen und positionieren. Gegebenenfalls ist eine Hilfskraftunterstützung vorgesehen, z.B. eine Hilfsfeder, die in Anhebe- oder Absenkrichtung den Verschiebewiderstand überwinden hilft. Alternativ kann ein einfacher Hilfsantrieb zum ferngesteuerten willkürlichen Verstellen des Überrollbügels eingesetzt werden.

Sobald die Sperre gelöst wird, beaufschlagt der Kraftspeicher den Überrollbügel nicht direkt, sondern mittelbar über das Schubglied. Dank der Entkopplung zwischen dem Schubglied und dem Überrollbügel lässt sich der Überrollbügel vorher zum Einstellen der Kopfstützenhöhe bequem und leichtgängig verstellen und positionieren, z.B. von Hand oder mittels eines Servoantriebs, da die Kraft des vorgespannten Kraftspeichers über das Schubglied von der Sperre gehalten wird. Da auch die Schutzpositions-Verriegelungsvorrichtung am Schubglied angreift, beeinträchtigt sie die freie Verstellbar keit des Überrollbügels zum Einstellen der Kopfstützenhöhe nicht. Deshalb lässt sich der Überrollbügel auch aus der höchsten Kopfstützenposition bequem in Richtung zur Ruheposition verschieben. In der verriegelten Schutzposition stützt sich der Überrollbügel hingegen stabil an der Führung und über die Führung am Fahrzeugkörper ab. Es wäre aber möglich, die Schutzpositions-Verriegelungsvorrichtung direkt am Fahrzeugkörper abzustützen.

Zweckmäßig enthält die Mitnehmerkupplung wenigstens ein zumindest in etwa in der Bewegungsrichtung des Überrollbügels geführtes Schubglied, das mit dem Kraftspeicher über einen Mitnehmer entweder gekoppelt oder kuppelbar ist, und einen weiteren Mitnehmer für den Überrollbügel aufweist. An den Mitnehmern bzw. am Schubglied greifen alternativ die Sperre oder die Verriegelungsvorrichtung an, so dass beim willkürlichen Verstellen nur der Überrollbügel zu bewegen ist.

Da das Schubglied in der Schutzposition des Überrollbügels Crash-Belastungen in den Fahrzeugkörper einzuleiten hat, wird es in einem kompakten Führungskanal untergebracht, der gegenüber dem Fahrzeugkörper abgestützt ist. Die Schutzpositions-Verriegelungsvorrichtung ist platzsparend am Führungskanal angeordnet und auch um eine unmittelbare Krafteinleitung zu gewährleisten.

Um Bauraum zu sparen, ist es ferner günstig, den Mitnehmer für den Kraftspeicher und zumindest einen Teil des Kraftspeichers in den Führungskanal einzugliedern.

Der Mitnehmer für den Überrollbügel lässt sich als einfacher Fanghaken ausbilden.

Zweckmäßig wird der Angriffsbereich für den Mitnehmer des Schubgliedes am Überrollbügel verstärkt, um die Ausfahrbelastung und Crash-Belastungen möglichst großflächig zu übertragen. Dies ist wichtig für einen Überrollbügel, der als Faserverbundkunststoff-Schale ausgebildet ist.

Am Schubglied lassen sich Riegelelemente für wenigstens eine Klinke vorsehen, die am Führungskanal gelagert ist und von außen in den Führungskanal bis in den Bereich der Riegelelemente eingreift. Dadurch werden optimal kurze Hebelarme für die Kraftübertragung erzielt.

Der Führungskanal kann ein stabiles Leichtmetall-Strangpressprofil mit annähernd U-förmigem Querschnitt sein, um Gewicht und Einbauraum zu sparen.

Zweckmäßig wird der Führungskanal an einer Tragplatte montiert, die mit einem Brückenkörper die Überrollbügelführung bildet, wobei an der Tragplatte Widerlager für den Kraftspeicher und die Sperre angeordnet sein können. Alternativ wäre es denkbar, als Tragplatte direkt eine Wand oder ein Blech im Fahrzeugkörper zu nutzen.

Die Kopfstützen-Höheneinstellvorrichtung lässt sich platzsparend direkt zwischen der Überrollbügelführung und dem Überrollbügel ausbilden. Gegebenenfalls befindet sich der stationäre Teil der Kopfstützen-Höheneinstellvorrichtung am Führungskanal.

Nach einem eigenständig erfinderischen Gedanken wird der Überrollbügel der Insassen-Schutzvorrichtung als eine einstückige Schale oder aus zwei aufeinandergelegten und miteinander verbundenen einstückigen Schalen, jeweils aus einem Faserverbundkunststoff, ausgebildet, zweckmäßigerweise durch thermisches Pressverformen von eine Kunststoffmatrix aufweisenden Endlosfaser-Prepregs mit belastungsorientierten Formstrukturen. Dadurch lässt sich gegenüber herkömmlichen Rohr- oder Strangpress-Überrollbügeln erheblich Gewicht einsparen und dank der belastungsorientierten Formstrukturen eine Überqualfikation des Überrollbügels für bestimmte Belastungsarten bzw. -Richtungen vermeiden, wie sie bei metallischen Überrollbügelkonzepten in Kauf zu nehmen ist. Als Endlosfäsern werden vorwiegend Glasfasern verwendet, es sind jedoch auch Aramid- oder Kohlenstofffasem denkbar.

Dank des großen Freiheitsgrades bei thermischen Pressverfahren von Faserverbundkunststoff kann in die Schale am Kopfende auch eine Aufnahme für den Kopfstützenaufsatz eingeformt sein, was die Anbringung des Kopfstützenaufsatzes erleichtert.

Besonders zweckmäßig ist die Schale aus Faserverbundkunststoff wie eine Badewanne ausgebildet, die an einem Ende quer abgeschnitten ist, wobei der Wannentrog und die Wannenrandbereiche belastungsorientierte Formstrukturen der Schale und zur Bewegungsführung des Überrollbügels erforderliche Gleitflächen bilden. Die Badenwannenform ist gekennzeichnet durch einen gerundeten Wannentrog, der an einem Ende bogenförmig schräg ausläuft und von einem weitgehend ebenen Randbereich umfasst wird. Die Ränder des Randbereichs, der schmaler ist als der Wannentrog, sind außen in der gleichen Richtung umgebogen, in der sich auch der Wannentrog von den Randbereichen weg erstreckt.

Um in Tiefenrichtung Platz zu sparen, wird die Badewannenform der Schale genutzt, um den Führungskanal mit dem Schubglied und dem Kraftspeicher innerhalb der Tiefenerstreckung der Schale, d.h. im Wannentrog, unterzubringen.

Die Oberseiten der Wannenrandbereiche bilden die Gleitflächen, mit denen die Schale großflächig direkt an der Führung gleitet.

Der große Freiheitsgrad bei der Formung der Schale aus Faserverbundkunststoff möglicht es, die den Überrollbügel bildende einstückige Schale mit einer Bogenkrümmung in Anheberichtung zu gestalten. Dies ermöglicht die Anpassung der Schutzvorrichtung an fahrzeugbedingte Gegebenheiten, z.B. die Krümmung der Rückenlehne des Fahrzeugsitzes, und hilft, Platz zu sparen.

Zweckmäßig ist in den Wannentrog eine zum abgeschnittenen Ende der Badewanne schräg verlaufende Rampe eingeformt, deren freier Endrand den Kraftangriffsbereich des Mitnehmers definiert. Diese Ausbildung ermöglicht eine großflächige Übertragung von Kräften an einer optimalen Position.

Um eine möglichst großflächige Kraftübertragung zwischen der Faserverbundkunststoff-Schale und dem Mitnehmer sicherzustellen, sollte der freie Endrand der Rampe umgebogen sein.

Die einfache Formbarkeit der Faserverbundkunststoff-Schale ermöglicht es, als Positionsrastelemente für die Kopfstützen-Positioniervorrichtung eine Reihe von Vertiefungen einzuformen. Dadurch lässt sich die Kopfstützen-Höheneinstellvorrichtung aus wenigen Teilen gewichtssparend realisieren.

Anhand der Zeichnung werden Ausführungsformen des Erfindungsgegenstandes erläutert. Es zeigen:
- Fig. 1: schematisch eine Insassen-Schutzvorrichtung für ein Kraftfahrzeug,
- Fig. 2: eine Perspektivansicht einer konkreten Ausführungsform einer Insassen-Schutzvorrichtung,
- Fig. 3: eine Perspektivansicht eines Details der Schutzvorrichtung von Fig. 2,
- Fig. 4: perspektivisch einen Schalen-Überrollbügel der Schutzvorrichtung von Fig. 2,
- Fig. 5: eine Perspektivansicht ähnlich der von Fig. 4,
- Fig. 6: eine Seitenansicht zu Fig. 5, und
- Fig. 7: eine schematische Schnittdarstellung einer weiteren Ausführungsform des Überrollbügels.

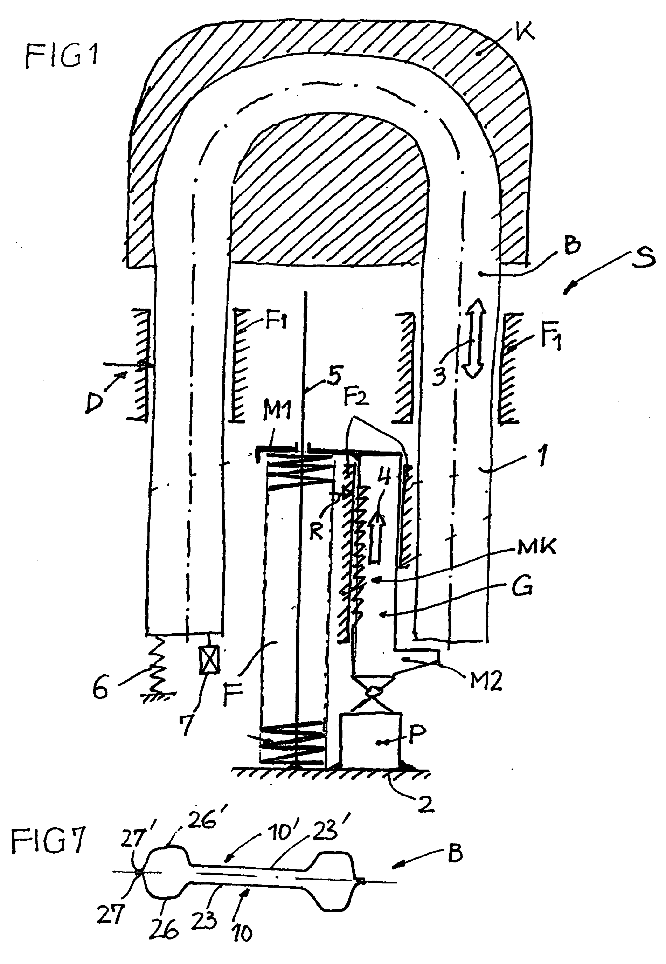

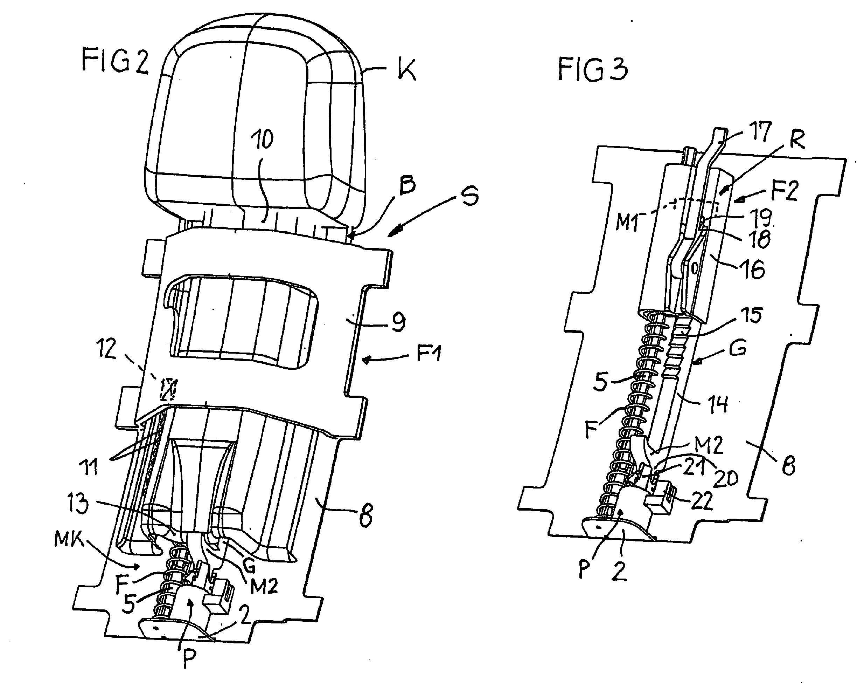

In der in Fig. 1 schematisierten Insassen-Schutzvorrichtung S für ein Fahrzeug z.B. ein Pkw-Cabriolet, ist ein U-förmiger Überrollbügel B angedeutet. Jedoch ist die Form oder Ausbildung des Überrollbügels B nicht an die U-Form gebunden, sondern der Überrollbügel B kann auch als Strangpress- oder Kastenprofil aus Metall oder Leichtmetall oder aus Faserverbundkunststoff (wie in den Fig. 2 bis 6) ausgebildet sein.

Der Überrollbügel B hat eine Doppelfunktion. Einerseits fungiert er als Träger eines Kopfstützenaufsatzes K, dessen Höhe durch eine willkürliche Verstellung des Überrollbügels B an die jeweilige Kopfposition eines Fahrzeug-Insassen anpassbar ist, (gegebenenfalls ist der Kopfstützenaufsatz K sogar noch zusätzlich relativ zum Überrollbügel B verstellbar), andererseits ist er so im nicht dargestellten Fahrzeugkörper angeordnet, dass er aus einer abgesenkten Ruheposition in eine angehobene Schutzposition verstellbar und in dieser verriegelbar ist, um bei einem Fahrzeug-Crash (Überschlag) Belastungen aufzunehmen und in den Fahrzeugkörper einzuleiten. Die Schutzvorrichtung S wird üblicherweise hinter einer Sitzlehne im Fahrzeugkörper montiert. Es ist eine Doppelbügelausführung möglich, bei der zwei hinter zwei Sitzen nebeneinanderliegende Überrollbügel B miteinander verbunden sind. Der Überrollbügel B ist so angebracht, dass er mit seiner in Fig. 1 durch die U-Form definierten Hauptebene in etwa quer zur Fahrzeuglängsrichtung vertikal oder schrägstehend angeordnet ist.

In Fig. 1 ist der Überrollbügel B mit seinen U-Schenkeln 1 in einer Führung F1 verstellbar abgestützt. In der Führung F1 lässt sich der Überrollbügel B in Richtung eines Doppelpfeils 3 willkürlich auf- und abverstellen und in der jeweils gewählten Höhenposition mittels einer schematisch angedeuteten Kopfstützen-Höheneinstellvorrichtung D positionieren. Die Führung F1 ist im Fahrzeugkörper montiert.

Um den Überrollbügel B im Crash-Fall unabhängig von seiner momentanen Höheneinstellung sehr schnell in die angehobene Sitzposition zu verstellen, ist wenigstens ein Kraftspeicher F vorgesehen, beispielsweise eine Schraubendruckfeder, ein Federspeicherzylinder, eine Treibladung oder dergleichen. Der Kraftspeicher F stützt sich gegenüber dem Fahrzeugkörper z.B. bei 2 ab, d.h., entweder direkt am Fahrzeugkörper oder an der Führung F1. Der Kraftspeicher F ist durch eine lösbare Sperre P in einer vorgespannten Stellung gehalten. Im kinematischen Kraftübertragungsweg vom Kraftspeicher F zum Überrollbügel B ist eine in Ausfahrrichtung des Überrollbügels B wirksame Mitnehmericupplung MK vorgesehen, über die der Überrollbügel B durch den ausgelösten Kraftspeicher F rasch in die Schutzposition verstellbar ist (Ausfahrrichtung 4). Zur willkürlichen Verstellung bleibt er über die Mitnehmerkupplung MK vom Kraftspeicher F entkoppelt und nur gegen sein Eigengewicht und den Widerstand in der Führung F 1 verstellbar, z.B. von Hand. Zur willkürlichen Verstellung kann ein Hilfsantrieb 6, z.B. zur Gewichtsentlastung, am Überrollbügel B assistieren. Alternativ oder additiv könnte ein Servoantrieb 7 für diesen Zweck eingesetzt werden.

Die Mitnehmerkupplung MK enthält wenigstens ein in einem Führungskanal F2 der Führung F1 in Verstellrichtung des Überrollbügels B verschiebbar geführtes Schubglied G, das mit einem ersten Mitnehmer M1 mit dem Kraftspeicher F gekoppelt oder koppelbar ist und am anderen Ende einen zweiten Mitnehmer M2 trägt, der in Bewegungsrichtung des Schubgliedes G auf einen U-Schenkel 1 des Überrollbügels B oder ein anderes, nicht gezeigtes Anschlagglied des Überrollbügels B ausgerichtet ist.

In der Schutzposition ist der Überrollbügel B gegenüber dem Fahrzeugkörper verriegelbar. Zu diesem Zweck ist zwischen dem Führungskanal F2 und dem Schubglied G eine Schutzpositions-Verriegelungsvorrichtung R vorgesehen. Eine lösbare Sperre P ist am Fahrzeugkörper oder bei 2 bzw. an der Führung F1 abgestützt, die das Schubglied G bzw. die Mitnehmerkupplung MK in der gezeigten Bereitschaftsstellung festlegt. Für den Kraftspeicher F kann eine Bewegungsführung 5 vorgesehen sein.

### Funktionen:

Zur Höheneinstellung des Kopfstützenaufsatzes K wird der Überrollbügel B bei mit der Sperre P verriegeltem Schubglied G in der Führung F1 verstellt und mittels der Kopfstützen-HÖheneinstellungsvorrichtung D und/oder der Hilfsvorrichtung 6 und/oder dem Hilfsantrieb 7 in der jeweils eingestellten Höhenposition positioniert. Bei Detektieren einer Crash-Situation wird die Sperre P gelöst, die das Schubglied G freigibt. Der Kraftspeicher F nimmt das Schubglied G in Richtung des Pfeils 4 über den ersten Mitnehmer M1 mit. Der zweite Mitnehmer M2 ist oder kommt am Überrollbügel B zum Angriff und hebt diesen rasch in die Schutzposition, die beispielsweise durch nicht gezeigte Anschläge definiert ist. Die Schutzpositions-Verriegelungsvorrichtung R greift zwischen dem Führungskanal F2 und dem Schubglied G ein, so dass der Überrollbügel B unter auftreffenden Belastungen in der Schutzposition abgestützt bleibt und Reaktionskräfte aus diesen Belastungen hauptsächlich über die Verriegelungsvorrichtung R in den Fahrzeugkörper eingeleitet werden.

Fig. 2 verdeutlicht eine als Baueinheit vorfertigbare und einbaubare Insassen-Schutzvorrichtung S. Die Abstützung 2 ist in eine Tragplatte 8 eingegliedert, die mit einem Brückenkörper 9 die Führung F1 für den Überrollbügel B definiert. Die Führung F1 ist wie auch der Überrollbügel B mit einer Krümmung in Anheberichtung geformt, z.B. in Anpassung an die Rückenlehnenkontur des Fahrzeugsitzes. Eine ebene Ausführung ist ebenfalls möglich. Der Überrollbügel B ist eine einstückig aus Faserverbundkunststoff gefertigte Schale 10. Der Faserverbundkunststoff enthält Endlosfasern, z.B. Glasfasern, in einer Kunststoffmatrix, z.B. aus Polypropylen, und ist in einem thermischen Pressverfahren mit auf die zu erwartenden Belastungsfälle und -stärken, die Führung, die Positionierung und das schnelle Anheben in die Schutzposition abgestimmten Formstrukturierungen und Wandstärkenabstufungen ausgebildet. Die Schale10 hat die Form einer an einem Ende quer abgeschnittenen Badewanne, wie anhand der Fig. 3 bis 6 erläutert werden wird, d.h. sie enthält einen gerundeten schräg auslaufenden breiten Wannentrog, der von einem im Wesentlichen ebenen Randbereich umfasst wird.

In die Schale 10 ist eine Reihe von Positioniervertiefungen 11 eingeformt, die mit einer beispielsweise im Brückenkörper 9 enthaltenen Positioniervorrichtung 12 die Kopfstützen-Höheneinstellvorrichtung D definieren. Am unteren Endbereich der Schale 10 ist ein verstärkter Kraftangriffsbereich 13 für den zweiten Mitnehmer M2 des Schubgliedes G der Mitnehmerkupplung MK geformt. Der zweite Mitnehmer M2 ist als Greifhaken ausgebildet. In diesem Bereich greift auch die Sperre 2 am Schubglied G an, benachbart zum Kraftspeicher F. In Fig. 2 ist die Bereitschaftsstellung des Überrollbügels B gezeigt, aus der er entweder willkürlich angehoben und danach wieder abgesenkt oder mittels des Kraftspeichers F rasch bis in eine ausgefahrene Schutzposition anhebbar und verriegelbar ist.

Fig. 3 verdeutlicht die Antriebsvorrichtung des Überrollbügels B. Auf der Tragplatte 8 ist der Führungskanal F2 in Form eines Leichtmetall-Strangpressprofilabschnittes 16 mit U-Querschnitt mit den Enden seiner U-Schenkel festgelegt, z.B. festgeschweißt. Das Schubglied G ist als langgestreckter Profilstab 14 ausgebildet und liegt auf der Tragplatte 8 auf. An seiner Oberseite sind Riegelelemente 15, z.B. mit sägezahnartiger Profilierung, geformt, zweckmäßigerweise über eine dem Ausfahrhub des Überrollbügels entsprechende Länge.

Am Führungskanal F ist außen ein hebelförmiger Klinkenträger 17 schwenkbar gelagert, der eine Sperrklinke 18 trägt, die durch einen Ausschnitt 19 im Führungskanal F2 bis in den Bereich der Riegelelemente 15 eingreift. Die Klinke 18 bzw. der Klinkenträger 17 ist durch eine nicht dargestellte Feder in Eingriffsrichtung vorgespannt. Im Inneren des Leichtmetall-Strangpressprofilabschnittes 16, der den Führungskanal F2 bildet, verbindet der erste Mitnehmer M1 das obere Ende des Federspeichers F mit dem Schubglied G. Der zweite Mitnehmer M2 ist am unteren Ende des Schubgliedes G angeformt, derart, dass er von der Tragplatte 8 nach oben ragt. Ein Greifende 20 am Riegelglied G arbeitet mit einem Halteelement 21 der Sperre P zusammen, die durch einen Auslöser 22 aus der gezeigten Sperrstellung lösbar ist, um das Schubglied G freizugeben. Das freigegebene Schubglied G wird durch den Kraftspeicher F nach oben geschoben und nimmt mit dem zweiten Mitnehmer M2 den Überrollbügel B in die Schutzposition mit. Dabei läuft die Klinke 18 über die Riegelelemente 15, bis sie in der Schutzposition das Schubglied G gegen Zurückbewegen blockiert und den Überrollbügel B abstützt.

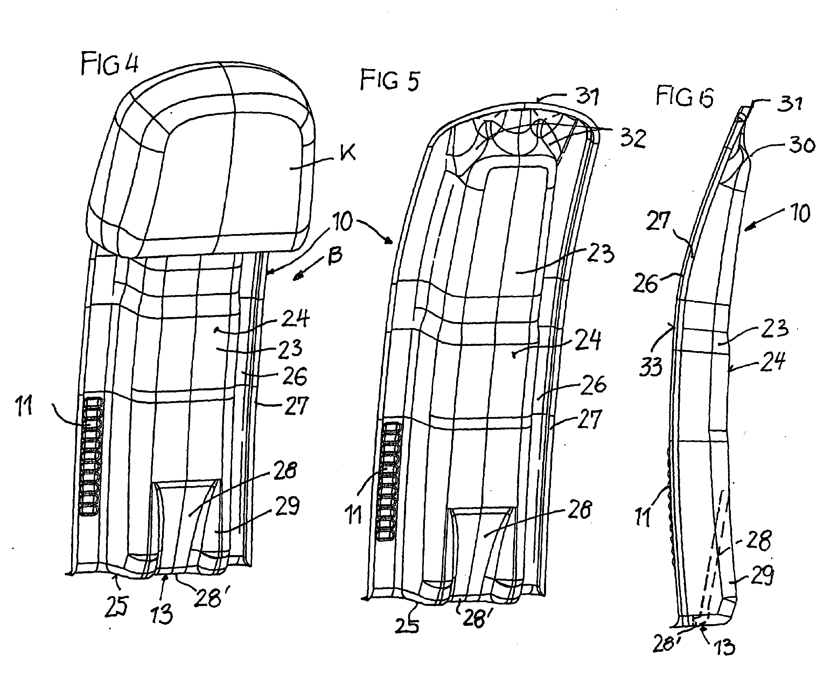

Die Fig. 4 , 5 und 6 zeigen die charakteristische Form der Schale 10, die den Überrollbügel B mit aufgesetztem Kopfstützenaufsatz K bildet. Die Faserverbundkunststoff-Schale 10 ist unter Verwendung von Endlosglasfasern in einem Schichtenaufbau aus mit thermoplastischem Kunststoff wie Polypropylen imprägnierten Prepregs, nach einem thermischen Pressverfahren hergestellt. In den Prepgregs bilden die Glasfasern als Kett- und Schussfäden gewebeartige Strukturen.

In Längsrichtung der Schale 10 verläuft ein von der Zeichnungsebene vorspringender Wannentrog 23, dessen Unterseite eine Gleitfläche 24 für den Überrollbügel F1 bildet, bis zum quer abgeschnittenen Ende 25 der Badewanne. Der Wannentrog 23 ist von einem im Wesentlichen ebenen Wannenrandbereich 26 umfasst, der sich zum Kopfende 31 der Schale 10 erstreckt. Zwischen dem Wannentrog 23 und dem Kopfbereich 31 sind beispielsweise sickenartige Formstrukturierungen 32 in die Schale 10 eingeformt. Die Oberseiten des Wannenrandbereichs 26 bilden (Fig. 6) Gleitflächen 23 der Schale 10 in der Führung F1, z. B. auf der Tragplatte 8 in Fig. 3. Im Wannenrandbereich 26 sind die Positioniervertiefungen 11 eingeprägt, die zur Kopfstützen-Höheneinstellung dienen. Zum abgeschnittenen Ende 25 der Badewannenstruktur verläuft in einem Endabschnitt des Wannentrogs 23 eine schräge Rampe 28, die beiderseits von sickenartigen Begrenzungen 29 eingefasst ist und sich konisch verjüngt. Die Rampe 28 bildet mit ihrem nach unten abgebogenen Rand 28' den Kraftangriffsbereich 13 für den zweiten Mitnehmer M2 des Schubglieds G. Der Führungskanal F2 ist innerhalb des durch den Wannentrog 23 definierten Hohlraums auf der Tragplatte 8 (Fig. 2) positioniert, so dass die Tiefe der Führung F1 in Fig. 2 in etwa senkrecht zur Zeichnungsebene nur geringfügig größer ist als die Tiefe der Schale 10. Dadurch ergibt sich eine kompakte Baugröße der Baueinheit.

In Fig. 6 ist der Kopfbereich 31 der Schale 10 mit einer Aufnahme 30 für die Kopfstützenauflage K geformt. Die Wandstärke der Schale 10 kann in Längsrichtung und in Querrichtung variieren. Die in den gezeigten Ausführungsformen vorgesehene Bogenkrümmung der Führung F1 und der Schale 10 kann an die Rückenlehnenkrümmung eines Fahrzeugsitzes angepasst sein. Alternativ könnte die Schale mit ihrer Führung auch geradlinig ausgebildet sein.

Der schematische Schnitt in Fig. 7 ist auf eine Ausführungsform des Überrollbügels B gerichtet, bei der dieser aus zwei aufeinandergelegten und im Bereich ihrer Ränder 27 verbundenen, jeweils einstückigen Schalen 10, 10' aus Faserverbundkunststoff besteht. Die Wannenrandbereiche 26 und 26' weisen voneinander weg, während die Wannentröge 23, 23' zueinander weisen. Es wäre möglich, die Schalen 10, 10' umgekehrt aneinander festzulegen. Ferner könnte bei einem anderen Überrollbügel-Konzept auf der in Fig. 5 gezeigten Schale 10 eine den Wannentrog 23 abdeckende, im Wesentlichen flache, zweite Schale aufgebracht sein.

## Patentansprüche

1. Insassen-Schutzvorrichtung (S) für ein Kraftfahrzeug, mit wenigstens einem hinter einer Sitzlehne im Fahrzeugkörper angeordneten, einen Kopfstützenaufsatz (K) tragenden Überrollbügel (B), der in einer im Fahrzeugkörper festlegbaren Führung (F1) zwischen einer tieferen Ruheposition und einer angehobenen Schutzposition verstellbar ist, mit wenigstens einem vorgespannten Kraftspeicher (F) zum raschen Verstellen des Überrollbügels in die Schutzposition, mit einer automatisch eingreifenden Schutzpositions-Verriegelungsvonichtung (R), mit einer lösbaren Sperre (P) für den Kraftspeicher (F), und mit einer Kopfstützen-Höheneinstellvorrichtung (D), **dadurch gekennzeichnet, dass** zwischen dem Kraftspeicher (F) und dem Überrollbügel (B) wenigstens eine ausschließlich in Anheberichtung des Überrollbügels (B) zur Schutzposition wirksame, den Überrollbügel (B) zur Kopfstützen-Höheneinstellung vom Kraftspeicher (F) entkoppelnde Mitnehmer-Kupplung (MK) vorgesehen ist, an der entweder die Sperre (P) oder die Schutzposidons-Verriegefungsvorrirhtung (R) zum Angriff bringbar ist.

2. Insassen-Schutzvorrichtung (S) nach Anspruch 1, **dadurch gekennzeichnet, dass** im Kraftübertragungsweg vom Kraftspeicher (F) zum Überrollbügel (B) wenigstens ein verstellbares Schubglied (G) mit Mitnehmern (M1, M2) für den Kraftspeicher (F) und den Überrollbügel (B) vorgesehen ist, dass die Sperre (P) am Schubglied (G) angreift, dass die Schutzpositions-Varriegefungsvorrichtung (R) zwischen der Führung (F1) und dem Schubglied (G) angeordnet ist, und dass der Überrollbügel (B) bei über die Sperre (P) abgestütztem Schubglied (G) vom Schubglied entkoppelt und unabhängig vom Schubglied (G) mit der Kopfstützen-Höheneinstellvorrichtung (D) in wählbaren Höhenlagen positionierbar ist.

3. Insassen-Schutzvorrichtung nach Anspruch 1, **dadurch gekennzeichnet, dass** der Überrollbügel (B) zur Kopfstützen-Höheneinstellung von Hand auf- und abverstellbar ist, vorzugsweise mit einer Hilfskraftunterstützung (6).

4. Insassen-Schutzvorrichtung nach Anspruch 1, **dadurch gekennzeichnet, dass** der Überrollbügel (B) zur Kopfstützen-Höheneinstellung mittels eines Hilfsantriebs (7) auf- und abverstellbar ist.

5. Insassen-Schutzvorrichtung nach Anspruch 2, **dadurch gekennzeichnet, dass** das Schubglied (G) in einem auf die Sperre (P) ausgerichteten, an der Führung (F1) abgestützten Führungskanal (F2) zumindest in etwa parallel zur Bewegungsrichtung des Überrollbügels (B) geführt ist, und dass die Schutzpositions-Verriegetungsvor richtung (R) an dem Führungskanal (F2) angeordnet ist

6. Insassen-Schutzvorrichtung nach Anspruch 5, **dadurch gekennzeichnet, dass** der Mitnehmer (M1) für den Kraftspeicher (F) und zumindest ein Teil des Kraftspeichers (F) im Führungskanal (F2) angeordnet sind.

7. Insassen-Schutzvorrichtung nach Anspruch 2, **dadurch gekennzeichnet, dass** der Mitnehmer (M2) für den Überrollbügel (B) als Fanghaken ausgebildet ist.

8. Insassen-Schutzvorrichtung nach Anspruch 2, **dadurch gekennzeichnet, dass** der Überrollbügel (B) einen verstärkten Angriffsbereich (13) für den Mitnehmer (M2) des Schubglieds (G) aufweist.

9. Insassen-Schutzvorrichtung nach Anspruch 2, **dadurch gekennzeichnet, dass** das Schubglied (G) Riegelelemente (15) für wenigstens eine, vorzugsweise federbelastete, Klinke (18) eines am Führungskanal (F2) gelagerten Klinkenträgers (17) aufweist, und dass die Klinke (18) in den Führungskanal (F2) und bis in den Bereich der Riegelelemente (15) eingreift.

10. Insassen-Schutzvorrichtung nach Anspruch 2, **dadurch gekennzeichnet, dass** der Führungskanal (F2) ein Leichtmetall-Strangpressprofil (16) mit annähernd U-för migem Querschnitt ist.

11. Insassen-Schutzvorrichtung nach wenigstens einem der vorhergehenden Ansprüche, **dadurch gekennzeichnet, dass** der Führungskanal (F2) an einer Tragplatte (8) montiert ist, die mit einem daran festgelegten Brückenkörper (9) die ÜberrollbügelFührung (F1) bildet, und dass an der Tragplatte (8) ein Widerlager (2) für den Kraftspeicher (F) und die Sperre (P) angeordnet sind.

12. Insassen-Schutzvorrichtung nach Anspruch 1, **dadurch gekennzeichnet, dass** am Überrollbügel (B) PositionsRastelemente (11) vorgesehen sind, und dass an der Überrotibügetfuhrung (F1) oder am Führungskanal (F2) eine mit den Positionsrastelementen zusammenwirkende Kopfstotzen-Positioniervorrichtung (12) vorgesehen ist.

13. Insassen-Schutzvorrichtung nach wenigstens einem der vorherigen Ansprüche, **dadurch gekennzeichnet, dass** der Überrollbügel (B) einschalig oder doppelschalig aus Faserverbundkunststoff, vorzugsweise mit Endlosglasfasern in einer Kunst stoffmatrix, ausgebildet ist.

14. Insassen-Schutzvorrichtung nach Anspruch 13, **dadurch gekennzeichnet, dass** die Faserverbundkunststoff-Schale (10, 10') am Kopfende (31) mit einer einstückig geformten Aufnahme (30) für den Kopfstützenaufsatz (K) ausgebildet ist.

15. insassen-Schutzvorrichtung nach Anspruch 13, **dadurch gekennzeichnet, dass** die Faserverbundkunststoff-Schale (10, 10') mit der Form einer an einem Ende quer abgeschnittenen Badewanne einstückig ausgebildet ist und das nicht abgeschnittene Badewannenende der Schale das Kopfende (31) des Überrollbügels (B) definiert, und dass die Oberseiten der Badewannenrandbereiche (26) und/oder die Unterseite des Wannentrogs (23) als Gleitfläche(n) (23, 24) des Überrollbügels (B) in der Führung (F1) ausgebildet sind.

16. Insassen-Schutzvorrichtung nach den Ansprüchen 2 und 15, **dadurch gekennzeichnet, dass** der Führungskanal (F2) mit dem Kraftspeicher (F) und dem Schubglied (G) innerhalb des Wannentrogs (23) der Faserverbundkunststoff-Schale (10) angeordnet sind, dass die Schale von der Führung (F1) umgriffen ist und mit den Oberseiten der Randbereiche (26) der Tragplatte (8) zugewandt ist.

17. Insassen-Schutzvorrichtung nach Anspruch 15, **dadurch gekennzeichnet, dass** die Führung (F1) und die Faserverbundkunststoff-Schale (10) in Verstellrichtung des Überrollbügels (B) mit einer Bogenkrümmung ausgebildet sind.

18. Insassen-Schutzvorrichtung nach Anspruch 15, **dadurch gekennzeichnet, dass** in den Wannentrog (23) eine zum quer abgeschnittenen Ende (25) der Badewannenform schräg ansteigende Rampe (28) eingeformt ist, deren freier Endrand als der Kraftangriffsbereich (13) der Schale (10) für den Mitnehmer (M2) ausgebildet ist.

19. Insassen-Schutzvorrichtung nach Anspruch 16, **dadurch gekennzeichnet, dass** am freien Endrand der Rampe (28) eine Anschlags-Umbiegung (28') in die Schale (10) eingeformt ist

20. Insassen-Schutzvorrichtung nach Anspruch 15, **dadurch gekennzeichnet, dass** an der Unterseite des Randbereiches (26) der Schale (10) eine Reihe von Vertiefungen eingeformt ist, die die Positionsrastelemente (11) für die Kopfstinzen-Positioniervorrichtung (D, 12) bilden.

## Claims

1. Occupant-protection device (S) for a motor vehicle, with at least one roll-over bar (B) which is arranged behind a seat-back in the body of the vehicle, which bears a head-restraint attachment (K), and which is capable of being adjusted in a guide (F1) which is capable of being fixed in the body of the vehicle between a lower rest position and a raised protective position, with at least one preloaded energy-storing device (F) for rapid adjustment of the roll-over bar into the protective position, with an automatically engaging protective-position locking device (R), with a releasable lock (P) for the energy-storing device (F), and with a head-restraint height-setting device (D), **characterised in that** between the energy-storing device (F) and the roll-over bar (B) at least one driving-pin coupling (MK) is provided which is effective exclusively in the raising direction of the roll-over bar (B) to the protective position, which for the height setting of the head restraint decouples the roll-over bar (B) from the energy-storing device (F), and on which either the lock (P) or the protective-position locking device (R) is capable of being brought into action.

2. Occupant-protection device (S) according to Claim 1, **characterised in that** in the force-transmission path from the energy-storing device (F) to the roll-over bar (B) at least one adjustable thrust member (G) with driving pins (M1, M2) for the energy-storing device (F) and the roll-over bar (B) is provided, **in that** the lock (P) acts on the thrust member (G), **in that** the protective-position locking device (R) is arranged between the guide (F1) and the thrust member (G), and **in that** when the thrust member (G) is supported via the lock (P) the roll-over bar (B) is decoupled from the thrust member and is capable of being positioned at selectable heights independently of the thrust member (G) with the head-restraint height-setting device (D).

3. Occupant-protection device according to Claim 1, **characterised in that** for the height setting of the head restraint the roll-over bar (B) is capable of being adjusted up and down by hand, preferably with power assistance (6).

4. Occupant-protection device according to Claim 1, **characterised in that** for the height setting of the head restraint the roll-over bar (B) is capable of being adjusted up and down by means of an auxiliary drive (7).

5. Occupant-protection device according to Claim 2, **characterised in that** the thrust member (G) is guided at least roughly parallel to the direction of motion of the roll-over bar (B) in a guide channel (F2) oriented towards the lock (P) and supported on the guide (F1), and **in that** the protective-position locking device (R) is arranged on the guide channel (F2).

6. Occupant-protection device according to Claim 5, **characterised in that** the driving pin (M1) for the energy-storing device (F) and at least a part of the energy-storing device (F) are arranged in the guide channel (F2).

7. Occupant-protection device according to Claim 2, **characterised in that** the driving pin (M2) for the roll-over bar (B) takes the form of a catch hook.

8. Occupant-protection device according to Claim 2, **characterised in that** the roll-over bar (B) exhibits a reinforced application region (13) for the driving pin (M2) of the thrust member (G).

9. Occupant-protection device according to Claim 2, **characterised in that** the thrust member (G) exhibits latching elements (15) for at least one, preferably spring-loaded, pawl (18) of a pawl-carrier (17) borne on the guide channel (F2), and **in that** the pawl (18) engages with the guide channel (F2) as far as the region of the latching elements (15).

10. Occupant-protection device according to Claim 2, **characterised in that** the guide channel (F2) is a light-metal extruded profile (16) with approximately U-shaped cross-section.

11. Occupant-protection device according to at least one of the preceding claims, **characterised in that** the guide channel (F2) is mounted on a base plate (8) which, with a bridge body (9) fixed thereon, constitutes the roll-over-bar guide (F1), and **in that** an abutment (2) for the energy-storing device (F) and the lock (P) are arranged on the base plate (8).

12. Occupant-protection device according to Claim 1, **characterised in that** position-indexing elements (11) are provided on the roll-over bar (B), and **in that** a head-restraint positioning device (12) interacting with the position-indexing elements is provided on the roll-over-bar guide (F1) or on the guide channel (F2).

13. Occupant-protection device according to at least one of the preceding claims, **characterised in that** the roll-over bar (B) is of single-shell or double-shell design and made of fibre-plastic composite, preferably with endless glass fibres in a plastic matrix.

14. Occupant-protection device according to Claim 13, **characterised in that** the fibre-plastic-composite shell (10, 10') is formed at the head end (31) with an integrally moulded socket (30) for the head-restraint attachment (K).

15. Occupant-protection device according to Claim 13, **characterised in that** the fibre-plastic-composite shell (10, 10') is integrally formed with the shape of a bathtub that has been transversely truncated at one end, and the bathtub end of the shell that has not been truncated defines the head end (31) of the roll-over bar (B), and **in that** the upper sides of the bathtub marginal regions (26) and/or the underside of the tub trough (23) take(s) the form of sliding surface(s) (23, 24) of the roll-over bar (B) in the guide (F1).

16. Occupant-protection device according to Claims 2 and 15, **characterised in that** the guide channel (F2) with the energy-storing device (F) and with the thrust member (G) are arranged within the tub trough (23) of the fibre-plastic-composite shell (10), **in that** the shell is encompassed by the guide (F1) and with the upper sides of the marginal regions (26) faces towards the base plate (8).

17. Occupant-protection device according to Claim 15, **characterised in that** the guide (F1) and the fibre-plastic-composite shell (10) are formed with an arcuate curvature in the direction of adjustment of the roll-over bar (B).

18. Occupant-protection device according to Claim 15, **characterised in that** a ramp (28) rising obliquely relative to the end (25) of the bathtub shape that has been transversely truncated is moulded into the tub trough (23), the free end edge of said ramp taking the form of the force-application region (13) of the shell (10) for the driving pin (M2).

19. Occupant-protection device according to Claim 16, **characterised in that** at the free end edge of the ramp (28) a limit-stop bend (28') is moulded into the shell (10).

20. Occupant-protection device according to Claim 15, **characterised in that** a row of depressions which constitute the position-indexing elements (11) for the head-restraint positioning device (D, 12) is moulded on the underside of the marginal region (26) of the shell (10).

## Revendications

1. Dispositif de protection de passager (S) pour un véhicule, comprenant au moins un arceau de sécurité (B) disposé derrière un dossier dans le corps du véhicule et portant un élément rapporté d'appui-tête (K), lequel arceau peut être déplacé dans un guide (F1) fixable dans le corps du véhicule entre une position de repos basse et une position de protection surélevée, au moins un accumulateur de force (F) pré-tendu pour le déplacement rapide de l'arceau de sécurité dans la position de protection, un dispositif de verrouillage de position de protection (R) s'engageant automatiquement, un dispositif de blocage (P) amovible pour l'accumulateur de force (F), et un dispositif de réglage en hauteur de l'appui-tête (D), **caractérisé en ce que** entre l'accumulateur de force (F) et l'arceau de sécurité (B) est prévu au moins un accouplement d'entraîneur (MK) efficace seulement dans le sens de soulèvement de l'arceau de sécurité (B) pour la position de protection et dissociant l'arceau de sécurité (B) pour le réglage en hauteur de l'appui-tête de l'accumulateur de force (F), accouplement sur lequel le dispositif de blocage (P) ou le dispositif de verrouillage de position de protection (R) peut être amené en prise.

2. Dispositif de protection de passager (S) selon la revendication 1, **caractérisé en ce que** dans le chemin de transmission de force allant de l'accumulateur de force (F) à l'arceau de sécurité (B) est prévu au moins un élément de poussée (G) réglable avec des entraîneurs (M1, M2) pour l'accumulateur de force (F) et l'arceau de sécurité (B), **en ce que** le dispositif de blocage (P) s'applique sur l'élément de poussée (G), **en ce que** le dispositif de verrouillage de position de protection (R) est disposé entre le guide (F1) et l'élément de poussée (G) et **en ce que** l'arceau de sécurité (B) est dissocié de l'élément de poussée lorsque l'élément de poussée (G) est soutenu par le dispositif de blocage (P) et peut être positionné, indépendamment de l'élément de poussée (G), avec le dispositif de réglage en hauteur de l'appui-tête (D) dans des positions de hauteur sélectionnables.

3. Dispositif de protection de passager selon la revendication 1, **caractérisé en ce que** l'arceau de sécurité (B) pour le réglage en hauteur d'appui-tête peut être réglé manuellement vers le haut et vers le bas, de préférence avec un dispositif de force assistée (6).

4. Dispositif de protection de passager selon la revendication 1, **caractérisé en ce que** l'arceau de sécurité (B) pour le réglage en hauteur de l'appui-tête peut être réglé vers le haut et vers le bas au moyen d'un entraînement auxiliaire (7).

5. Dispositif de protection de passager selon la revendication 2, **caractérisé en ce que** l'élément de poussée (G) est guidé dans un canal de guidage (F2) axé sur le dispositif de blocage (P) et soutenu sur le guide (F1) au moins à peu près parallèlement au sens de déplacement de l'arceau de sécurité (B) et **en ce que** le dispositif de verrouillage de la position de protection (R) est disposé sur le canal de guidage (F2).

6. Dispositif de protection de passager selon la revendication 5, **caractérisé en ce que** l'entraîneur (M1) pour l'accumulateur de force (F) et au moins une partie de l'accumulateur de force (F) sont disposés dans le canal de guidage (F2).

7. Dispositif de protection de passager selon la revendication 2, **caractérisé en ce que** l'entraîneur (M2) pour l'arceau de sécurité (B) est conçu comme un crochet d'arrêt.

8. Dispositif de protection de passager selon la revendication 2, **caractérisé en ce que** l'arceau de sécurité (B) présente une zone d'application (13) renforcée pour l'entraîneur (M2) de l'élément de poussée (G).

9. Dispositif de protection de passager selon la revendication 2, **caractérisé en ce que** l'élément de poussée (G) présente des éléments de verrou (15) pour au moins une clenche (18), de préférence sollicitée par ressort, d'un porte-clenche (17) logé sur le canal de guidage (F2) et **en ce que** la clenche (18) s'engage dans le canal de guidage (F2) et jusque dans la zone des éléments de verrou (15).

10. Dispositif de protection de passager selon la revendication 2, **caractérisé en ce que** le canal de guidage (F2) est un profilé extrudé en métal léger (16) avec une section approximativement en U.

11. Dispositif de protection de passager selon au moins l'une quelconque des revendications précédentes, **caractérisé en ce que** le canal de guidage (F2) est monté sur une plaque de support (8), qui forme avec un corps de pont (9) fixé dessus le guidage de l'arceau de sécurité (F1) et **en ce qu'**un palier de butée (2) pour l'accumulateur de force (F) et le dispositif de blocage (P) sont disposés sur la plaque de support (8).

12. Dispositif de protection de passager selon la revendication 1, **caractérisé en ce que** sur l'arceau de sécurité (B) sont prévus des éléments d'encliquetage de position (11) et **en ce que** sur le guidage de l'arceau de sécurité (F1) ou sur le canal de guidage (F2) est prévu un dispositif de positionnement d'appui-tête (12) coopérant avec les éléments d'encliquetage de position.

13. Dispositif de protection de passager selon au moins l'une quelconque des revendications précédentes, **caractérisé en ce que** l'arceau de sécurité (B) est conçu avec une coque simple ou une coque double à base de plastique renforcé par des fibres, de préférence avec des fibres de verre continues dans une matrice plastique.

14. Dispositif de protection de passager selon la revendication 13, **caractérisé en ce que** la coque en plastique renforcé par des fibres (10, 10') est réalisée sur l'extrémité du sommet (31) avec un logement (30) formé d'une seule pièce pour l'élément rapporté d'appui-tête (K).

15. Dispositif de protection de passager selon la revendication 13, **caractérisé en ce que** la coque en plastique renforcé par des fibres (10, 10') est conçue d'une seule pièce avec la forme d'une baignoire coupée transversalement à une extrémité et l'extrémité de baignoire non coupée de la coque définit l'extrémité supérieure (31) de l'arceau de sécurité (B) et **en ce que** les côtés supérieurs des zones périphériques de baignoire (26) et/ou le côté inférieur du bac de cuve (23) sont conçus comme surface (s) de glissement (23, 24) de l'arceau de sécurité (B) dans le guide (F1).

16. Dispositif de protection de passager selon les revendications 2 et 15, **caractérisé en ce que** le canal de guidage (F2) est disposé avec l'accumulateur de force (F) et l'élément de poussée (G) à l'intérieur du bac de cuve (23) de la coque en plastique renforcé par des fibres (10), **en ce que** la coque est entourée par le guide (F1) et est tournée avec les côtés supérieurs des zones périphériques (26) vers la plaque de support (8).

17. Dispositif de protection de passager selon la revendication 15, **caractérisé en ce que** le guide (F1) et la coque en plastique renforcé par des fibres (10) sont réalisés dans le sens de déplacement de l'arceau de sécurité (B) avec une cambrure.

18. Dispositif de protection de passager selon la revendication 15, **caractérisé en ce qu'**une rampe (28) montant en biais vers l'extrémité (25) coupée en travers de la forme de baignoire est formée dans le bac de cuve (23), rampe dont le bord d'extrémité libre est conçue comme la zone d'application de force (13) de la coque (10) pour l'entraîneur (M2).

19. Dispositif de protection de passager selon la revendication 16, **caractérisé en ce qu'**un cintrage de butée (28') est formé dans la coque (10) au bord d'extrémité libre de la rampe (28).

20. Dispositif de protection de passager selon la revendication 15, **caractérisé en ce qu'**une série de cavités, qui forment les éléments d'encliquetage de position (11) pour le dispositif de positionnement d'appui-tête (D, 12), est formée sur le côté inférieur de la zone de bordure (26) de la coque (10).
